(19) Europäisches Patentamt
European Patent Office
Office européen des brevets

(11) **EP 2 036 359 B1**

(12) **FASCICULE DE BREVET EUROPEEN**

(45) Date de publication et mention de la délivrance du brevet:
**05.12.2012 Bulletin 2012/49**

(51) Int Cl.:
***H04N 7/50*** *(2006.01)*

(21) Numéro de dépôt: **07786940.2**

(22) Date de dépôt: **29.06.2007**

(86) Numéro de dépôt international:
**PCT/EP2007/056580**

(87) Numéro de publication internationale:
**WO 2008/000822 (03.01.2008 Gazette 2008/01)**

(54) **PROCEDE PERMETTANT DE DETERMINER DES PARAMETRES DE COMPRESSION ET DE PROTECTION POUR LA TRANSMISSION DE DONNEES MULTIMEDIA SUR UN CANAL SANS FIL**

**VERFAHREN ZUM BESTIMMEN VON SCHUTZ- UND KOMPRESSIONSPARAMETERN ZUR ÜBERTRAGUNG VON MULTIMEDIA DATEN ÜBER EINEN DRAHTLOSEN KANAL**

**METHOD FOR DETERMINING PROTECTION AND COMPRESSION PARAMETERS FOR THE TRANSMISSION OF MULTIMEDIA DATA OVER A WIRELESS CHANNEL**

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **29.06.2006 FR 0605882**
**13.10.2006 FR 0608992**

(43) Date de publication de la demande:
**18.03.2009 Bulletin 2009/12**

(73) Titulaire: **Thales**
**92200 Neuilly Sur Seine (FR)**

(72) Inventeurs:
• **LAMY-BERGOT, Catherine**
**F-75019 Paris (FR)**
• **BERGERON, Cyril**
**F-75020 Paris (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 603 339        WO-A-02/37700**
**WO-A-2004/012458        WO-A-2004/056028**
**KR-A- 20040 073 628        US-A- 6 154 489**

• **ALEXIS BERNARD ET AL: "Speech Transmission Using Rate-Compatible Trellis Codes and Embedded Source Coding" IEEE TRANSACTIONS ON COMMUNICATIONS, IEEE SERVICE CENTER, PISCATAWAY, NJ, US, vol. 50, no. 2, février 2002 (2002-02), XP011010114 ISSN: 0090-6778**

**Description**

L'invention concerne un procédé et un dispositif permettant de déterminer des valeurs des paramètres de fonctionnement tels que le taux de compression et le taux de protection pour un point de fonctionnement optimisé dans le cadre d'une transmission de données multimédia sur un canal sans fil.

Elle est, par exemple utilisée, dans les transmissions de données vidéo respectant le standard H.264/AVC.

La transmission de données multimédia dans des canaux à largeur de bande limitée ou dans des canaux dont les erreurs sont prédictibles ont conduit à reconsidérer l'utilisation du principe de séparation de Shannon qui recommande de concevoir séparément le codage de source (compression) et le codage de canal (protection).

Cependant, pour respecter la compatibilité avec des standards existants, et le déploiement des architectures existantes où les couches réseau peuvent être présentes entre les codeurs source et canal, la compression et la protection sont conservés séparées bien que menées en coopération. Le codage source canal conjoint assure que l'impact des erreurs, pratiquement inévitables dans les canaux sans fil, soit pris en considération en combinant de manière efficace la compression et la protection sur le plan du rendu visuel. Les algorithmes classiques de contrôle de débit de source proposés en l'absence d'erreurs de transmissions reposent sur l'hypothèse que les outils de codage correcteur d'erreur (ou FEC pour Forward Error Correction) permettent l'arrivée des paquets exempts d'erreur au décodeur vidéo. Malgré l'intérêt particulier pour les transmissions sans fil ou la diffusion, ces solutions ne prennent en compte ni les effets importants de distorsion importants introduits par une probabilité d'erreur de bits résiduelle inévitable dans les transmissions à bande étroite, ni les sensibilités différentes des flux de bits.

Une première solution de codage conjoint tandem, qui suit le principe que les décodeurs vidéo souffrent principalement des pertes de paquets, traite la question de contrôle de débit de source en absence d'erreurs de transmission, et l'établissement des mécanismes d'élagage de paquets (paquets jetés). Cette approche orientée réseau ne prend pas en compte les possibilités offertes par des protocoles de transport plus récents tel que UDPlite (User Datagram Protocol light) ou DCCP (Data Congestion Control Protocol) qui permettent la remontée au niveau applicatif de charges utiles erronées, qui sont remises à des décodeurs en mesure de les exploiter.

Une seconde famille de schémas de codage conjoint tandem, utilise des outils FEC afin d'assurer que les probabilités d'erreurs de bit ou de paquets vues par le décodeur vidéo se situent en-dessous d'un seuil donné. Le schéma le plus efficace choisit les débits de canaux en fonction de l'analyse de la sensibilité des flux, le problème clé étant l'évaluation de la sensibilité. Les approches globales reposant sur une compression de transformation discrète de Cosinus DCT [1] (discrète cosinus transform) ou dédiées pour des standards de prédiction donnés [2] [3] proposent une définition de la sensibilité et de son impact sur la distorsion basée sur une formule analytique pour chaque trame [1][2] ou par une approche de type optimisation au plus juste (en anglais water-filling). Toutefois, ces approches requièrent soit d'ajuster le modèle grâce à de nombreux tests, empêchant un déploiement facile dans des situations pratiques, soit ne prennent pas totalement en compte les dépendances différentes existant dans le flux, éventuellement du fait de leur approche générique non reliée à un standard ou/une implémentation donné.

Le brevet US 6 154 489 décrit un procédé pour la transmission d'images numériques codées, qui utilise un estimateur de canal de transmission pour gérer le statut du canal, le niveau de puissance variable, le débit, le taux de compression et le débit délivré de l'émetteur utilisé pour transmettre les images.

Le procédé selon l'invention repose notamment sur l'utilisation d'un modèle semi-analytique prédisant la distorsion dans des données multimédia.

Dans le cas du standard H.264/AVC, la distorsion est calculée en estimant l'impact des erreurs des différentes partitions/trames, en fonction de la sensibilité respective aux erreurs et de l'influence de prédiction pour calculer la distorsion d'une trame prédite et d'un groupe d'images (GOP ou Group of Pictures).

Lorsqu'il est utilisé avec la protection FEC, le procédé permet de spécifier l'allocation de protection minimisant la distorsion d'un GOP ou la distorsion de la séquence vidéo (qui est une suite de plusieurs GOPs), par application du débit de protection adapté aux niveaux de sensibilité.

Le mot « slice » définit une partition connue de l'Homme de métier.

L'invention concerne un procédé permettant de déterminer des paramètres de fonctionnement, tels que le taux de compression et/ou le taux de protection pour un canal de transmission de données multimédia caractérisé en ce qu'il comporte au moins

une étape au cours de laquelle on détermine plusieurs valeurs de distorsion pour un groupement d'image ou GOP et pour des couples de valeurs , taux de compression souhaité pour la source, taux de compression,

en utilisant la formule suivante :

$$\hat{D}_{gop} = \prod_{i=0}^{N}(1-P_e)^{\beta_i n_i}.D_o +$$

$$\sum_{i=0}^{N}[\prod_{j=0}^{i-1}(1-P_e)^{\beta_j.n_j}.(1-(1-P_e)^{\beta_i n_i}).D_{loss_i}]$$

avec $P_e$ la probabilité d'erreur pour un bit, $P_c^{(\beta_j)}=(1-P_e)^{\beta_j.n_j}$ $D_o = D_{oN}$ la distorsion moyenne pour un groupement d'images,

une étape où l'on compare entre elles les différentes valeurs obtenues pour un point de fonctionnement du canal fixé, et une étape où l'on sélectionne la valeur de distorsion optimale, la valeur de distorsion étant définie en tenant compte du taux de protection souhaité et du taux de compression.

L'invention concerne aussi un dispositif permettant de déterminer des paramètres de fonctionnement, tels que le taux de compression et/ou le taux de protection pour un canal de transmission de données multimédia caractérisé en ce qu'il comporte au moins un module d'adaptation adapté à recevoir une information sur l'état du canal et les informations de rendement disponibles pour des codeurs, et générer des règles de codage, telles que les valeurs du taux de compression vidéo et du taux de protection en mettant en oeuvre les étapes du procédé comprenant l'une des caractéristiques précitées.

L'invention présente notamment comme avantages d'optimiser les taux de compression et de protection pour un point de fonctionnement optimisé pour la transmission de données multimédia sans fil, afin d'obtenir une meilleure qualité finale, se traduisant sous la forme d'un meilleur rendu visuel ou, objectivement (par la mesure objective), en terme de PNSR ou MSE.

D'autres caractéristiques et avantages de l'invention apparaîtront mieux à la lecture de la description qui suit donnée à titre illustratif et nullement limitatif annexée des figures qui représentent :

- La figure 1 un synoptique de modules utilisés pour mettre en oeuvre les étapes du procédé,
- La figure 2 différents résultats obtenus dans le cas de l'estimation pour plusieurs réalisations de couples taux de compression, taux de redondance appliqué à la séquence de référence 'Foreman' de l'ITU,
- La figure 3 différents résultats comparant les performances obtenues en employant le mode partition de données (DP) dans les cas d'application d'une protection égale ou d'une protection inégale sur les différentes slices de la séquence, appliqué à la séquence de référence 'Foreman',
- La figure 4 différents résultats comparant les performances obtenues en employant le mode mélange de trame (FS pour Frame Shuffle [6]) dans les cas d'application d'une protection égale EEP ou d'une protection inégale UEP sur les différentes slices de la séquence, appliqué à la séquence de référence 'Foreman', et
- La figure 5 la figure de mélange correspondant au mode arbre sur GOP.

Avant d'expliciter les étapes mises en oeuvre par le procédé selon l'invention, quelques rappels sur la manière d'estimer la sensibilité sont donnés.

## Estimation de la valeur moyenne espérée pour la distorsion de bout en bout (c'est-à-dire incluant l'effet de la compression et de la protection) $\hat{D}_{S+c}$ après

les opérations de codage de la source et du canal pour une séquence vidéo. Pour des raisons de simplification, chaque trame est codée dans une unique slice ou NAL (abbreviation de Network Abstraction Layer dans le standard H.264/AVC), bien que les résultats puissent être étendus aux cas de multiples slices multiples, comme on le verra par exemple dans du partitionement de données (DP pour data partitioning mode de réalisation spécifique du standard H.264/AVC).

La distorsion $\overline{D}_{s+c}$ pour une trame (ou NAL) transmise dans un canal avec erreurs, peut être déduite en tenant compte des différentes distorsions élémentaires $D_i$ correspondant à la probabilité d'erreur associée $P_i$ d'un événement d'erreur.

$$\hat{D}_{S+c}=\sum_{i\in\text{IN}}D_i.P_i$$

où IN est l'ensemble des entiers naturels

Théoriquement, chaque erreur de bit, ainsi que leurs différentes combinaisons correspond à un « événement d'erreur », dont l'impact sur l'image résultante décodée (avec ou sans correction d'erreur) doit être pris en compte. Pour la modélisation, on émet l'hypothèse que les erreurs peuvent être groupées et moyennées, considérant la distorsion résultante des erreurs dans la trame, selon qu'elles conduisent à une perte de la NAL avec $D_{loss}$ ou à une corruption partielle de la NAL avec $D_{corr}$, et la distorsion inhérente à l'opération de compression, qui touche même les NALs reçues correctement avec $D_o$. Pour $P_c$ (resp. $P_l$) la probabilité de recevoir correctement (respectivement de perdre complètement) une NAL, la distorsion de bout en bout conjointe source canal, or sensibilité est obtenue par :

$$\hat{D}_{S+C} = P_c.D_o + P_l.D_{loss} + (1 - P_c - P_l).D_{corr} \qquad (1)$$

La distorsion résultante sera exprimée en termes d'erreur quadratique moyenne ou Mean Squared Error (MSE) ou de rapport signal sur bruit ou Peak Signal to Noise Ratio (PSNR):

$$MSE = \sum_{i=1}^{M} \sum_{j=1}^{Q} \frac{(pl^{\bullet}(i,j) - pl(i,j))^2}{M \times Q}$$

$$PSNR = 10\,log_{10}(\frac{255^2}{MSE})$$

avec $M,Q$ la largeur et la hauteur de la trame vidéo, et $pl(i,j)$ (resp. $pl^*$) la luminance des pixels de la trame originale (resp. reconstruite)

Expression des probabilités dépendantes du canal de transmission

En considérant, comme exemple, un canal sans mémoire introduisant des erreurs avec une probabilité d'erreur de bit $P_e$ tel que le canal binaire symétrique (BSC pour Binary Symmetric Channel) ou le canal à bruit additif blanc Gaussien (AWGN pour Additive White Gaussian Channel), la probabilité d'erreur pour le canal de transmission s'exprime de la manière suivante:

$$P_c = (1 - P_e)^n$$

où $n$ est la taille de la trame exprimée en bits et $P_e = \frac{1}{2}erfc(\sqrt{\frac{E_s}{N_0}})$ pour un rapport signal/bruit $SNR = E_s/N_o$ sans codage de canal.

La probabilité $P_l$ de perdre une NAL est exprimée en utilisant [4], où il a été trouvé que les trames H.264/AVC Intra et Prédites pouvaient être partiellement bruitées (fraction $p$ de la trame) sans qu'il y ait désynchronisation du flux de données, conduisant seulement à des erreurs visuelles (artifacts) dans l'image reconstruite : on fait l'hypothèse que les trames contenant plus d'erreurs que la fraction $p$ sont des trames perdues alors que les trames dont la fraction bruitée est inférieure à p sont des trames corrompues, ce qui conduit à une probabilité de perte :

$$P_l = 1 - (1 - P_e)^{(1-p)n},$$

d'où une valeur de sensibilité :

$$\hat{D}_{S+C} = (1 - P_e)^n D_o + (1 - (1 - P_e)^{(1-p)n}).D_{loss} + ((1 - P_e)^{(1-p)n} - (1 - P_e)^n).D_{corr} \quad (2)$$

Trames Intra I et Prédites P

En tenant compte de l'observation empirique selon laquelle $MSE_{corr} \approx MSE_o$ pour les trames I et P codées selon le standard H.264/AVC, et l'estimation faite dans [4] de la fraction $p$ valant pour les trames Intra $1-\beta_0 \approx 0.25$ et $1-\beta_i \approx 0.15$ pour la $i^{th}$ trame prédite $P_i$, on exprime la sensibilité pour une trame Intra $\overline{D}_{Intra}$ :

$$\hat{D}_{Intra} = (1 - P_e)^{\beta_0 \cdot n} \cdot D_o + (1 - (1 - P_e)^{\beta_0 n}) \cdot D_{loss} \qquad (3)$$

De manière similaire, l'expression de la sensibilité pour la $i^{th}$ trame prédite $P_i$ d'un groupement d'images GOP, lorsque les trames précédentes sont correctement détectées est obtenue par :

$$\hat{D}_{P_i} = (1 - P_e)^{\beta_i \cdot n_i} \cdot D_{o_i} + (1 - (1 - P_e)^{\beta_i \cdot n_i}) \cdot D_{loss_i} \qquad (4)$$

avec $n_i$ la taille de la $i^{ène}$ P-trame, $D_{o_i}$ (resp. $D_{loss_i}$) la distorsion observée lorsque la trame est correcte (respectivement perdue) lorsque les trames précédentes sont correctes.

La sensibilité d'une trame codée H.264/AVC est ensuite dérivée en estimant seulement la distorsion obtenues pour les meilleures (absence d'erreur de transmission) et les plus mauvaises (perte de trame) conditions de transmission et la longueur de trame.

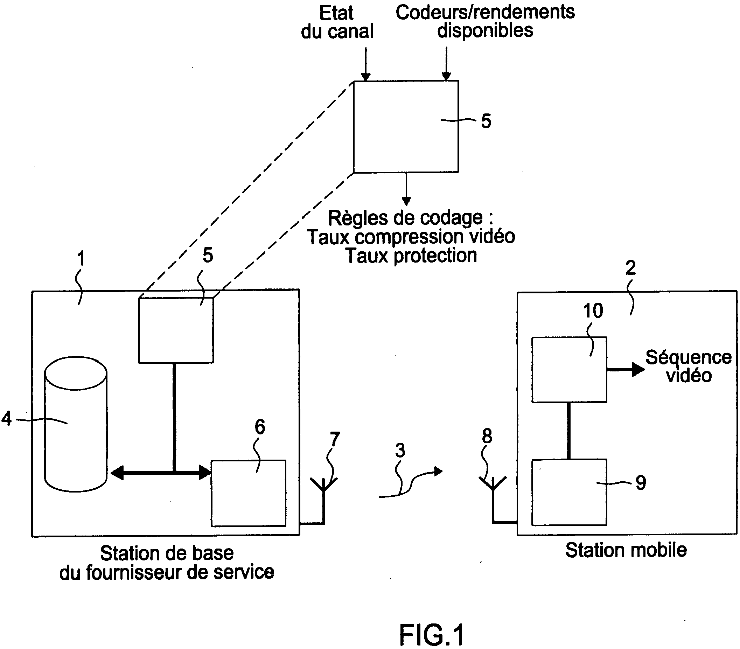

La figure 1 schématise un exemple de système adapté à exécuter les étapes selon l'invention.

L'exemple de la figure 1 comprend une station de base 1 du fournisseur de service et une station mobile 2, échangeant des données par l'intermédiaire d'un canal sans fil 3.

La station de base 1 comprend, par exemple, un codeur/serveur vidéo 4, un module d'adaptation/allocation 5, des couches d'accès radio 6.

La station mobile 2 comprend des couches d'accès réseau 9 et un décodeur vidéo 10 générant la séquence vidéo.

Les stations sont équipées respectivement d'antennes émission/réception 7, 8.

Le module d'adaptation/allocation 5 reçoit par exemple, l'information sur l'état du canal et les informations de rendement disponibles pour les codeurs, il génère des règles de codage, en particulier les valeurs du taux de compression vidéo et du taux de protection, en mettant en oeuvre les étapes décrites ci-après du procédé selon l'invention.

La mise en oeuvre d'un tel système s'effectue, par exemple, de la manière suivante.

Le module d'adaptation d'allocation réalisant l'invention reçoit l'information d'état du canal de transmission, ainsi qu'une information des codeurs et rendements disponibles pour la compression vidéo et la protection par la couche accès radio. Dans le cas où l'on considère un serveur de données vidéo précodées, le module peut donc recevoir l'information précise de sensibilité source (SSI pour Source Sensitivity Information) en terme notamment de tailles exactes des différentes partitions ou slices pour chacune des réalisations des flux précodés. Ce module détermine alors le meilleur couple taux de compression, taux de protection à employer pour un débit global sur le canal de transmission donné, au moyen du calcul estimé de la distorsion résultant pour la séquence considérée. Les règles de codage sont alors transmises pour application au codeur/serveur vidéo et à la couche accès radio qui réaliseront la compression et la protection des données selon ces règles pour envoi sur le canal de transmission. Les données codées passent alors à travers le canal de transmission sans fil avant d'être reçues par le récepteur qui réalisera l'opération de décodage correcteur d'erreur et l'opération de décodage vidéo produisant la séquence vidéo décodée.

Le procédé repose notamment sur l'utilisation d'une valeur de sensibilité déterminée en tenant compte du débit source et de la protection des données souhaitée, qui permet de définir un couple compression/protection optimal pour un point de fonctionnement pour le canal de transmission considéré.

Détermination de la sensibilité d'un GOP constitué d'une trame Intra I suivie de N trames prédites P, ou plus généralement d'un groupe de trames.

En pratique, P-trames et leur sensibilité vont dépendre des trames précédentes : si une trame P est mal reçue, alors les trames suivantes, même si elles sont transmises correctement ne seront pas reconstruites correctement.

On émet l'hypothèse suivante : si une trame est perdue, sa contribution à la distorsion d'éventuelles trames suivantes est négligeable. L'impact causé par le fait que les trames précédentes soient reçues de façon incorrecte est donc pris en compte en utilisant la probabilité conditionnelle d'avoir les trames précédentes correctes.

En utilisant les équations Eq. (3) et (4) avec $\beta_0 = \alpha$, la distorsion pour un GOP s'exprime de la manière suivante :

$$\hat{D} = P_c^{(\beta_0)}.D_{o_0} + (1 - P_c^{(\beta_0)}).D_{loss_0}$$

$$= P_c^{(\beta_0)}[P_c^{(\beta_1)}D_{o_1} + (1 - P_c^{(\beta_1)})D_{loss_1}] + (1 - P_c^{(\beta_0)})D_{loss_0}$$

$$= ...$$

$$= (\prod_{i=0}^{N} P_c^{(\beta_i)})D_{o_N} + \sum_{i=0}^{N}[\prod_{j=0}^{i-1} P_c^{(\beta_j)}(1 - P_c^{(\beta_i)})D_{loss_i}] \qquad (5)$$

avec $P_c^{(\beta_i)}$ la probabilité que la $i^{ème}$ trame, $D_{oi}$ (resp. $D_{lossi}$) soit bien reçue, la distorsion moyenne GOP observée lorsque les trames 0 (Intra) à $i$ sont correctes (resp. observée lorsque la $i^{ème}$ trame est perdue). Naturellement, ces probabilités conditionnelles pourraient être calculées plus précisément si l'on disposait de l'information totale de dépendance existant entre les trames (par exemple les numéros des trames utilisées comme référence pour chaque trame).

En considérant l'exemple d'un canal sans mémoire introduisant des erreurs avec une probabilité d'erreur pour un bit $P_e$, la probabilité d'avoir une réception correcte est $P_c^{(\beta_j)} = (1 - P_e)^{\beta_j.n_j}$ , :

$$\hat{D}_{gop} = \prod_{i=0}^{N} (1 - P_e)^{\beta_i n_i}.D_o +$$

$$\sum_{i=0}^{N}[\prod_{j=0}^{i-1} (1 - P_e)^{\beta_j.n_j}.(1 - (1 - P_e)^{\beta_i n_i}).D_{loss_i}] \qquad (6)$$

avec $D_o = D_{o_N}$ la distorsion moyenne pour un GOP.

Modèle données partitionnées ou 'Data Partitioning'

Lorsque le flux est séparé en plusieurs partitions ou "partitioné" selon le mode dit Data Partitioning du standard H.264/AVC, chaque trame prédite P est transmise en au plus trois « slices » (NAL-A, NAL-B, NAL-C), chaque « slice » étant dépendante des slices précédentes codant la même partie d'image pour qu'un décodage correct ait lieu. Pour prendre en compte la dépendance entre slices, on fait l'hypothèse que dans le cas où une partition est perdue, la distorsion résultante pour une partition suivante mal reçue est négligeable. La sensibilité d'un GOP DP est déduite de l'expression généralisée de l'équation (6) :

$$\hat{D}_{gop_{DP}} = \prod_{i=0}^{N}\prod_{k=1}^{3} (1 - P_e)^{(1-\beta_{i,k}).n_{i,k}}.D_o +$$

$$\sum_{i=0}^{N}\sum_{k=1}^{3}[\prod_{j=0}^{N}\prod_{\ell=1}^{k-1} (1 - P_e)^{\beta_{j,\ell} n_{j,\ell}} \prod_{j=0}^{i-1} (1 - P_e)^{\beta_{j,k} n_{j,k}}$$

$$(1 - (1 - P_e)^{(1-\beta_{i,k}).n_{i,k}})D_{loss_{i,k}}] \qquad (7)$$

avec $n_{i,k}$ la longueur de la $i^{ème}$ trame de la $k^{ème}$ partition, conduisant à une distorsion $D_{loss_{i,k}}$ si la partition est perdue et $n_i = \sum_{k=1}^{3} n_{i,k}$ .

Modèle données mélangées ou 'Frame Shuffle'

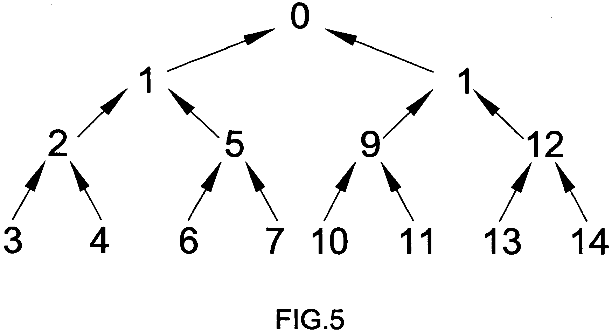

Lorsque le flux est compressé en utilisant une méthode particulière telle celle de mélange de trame proposée dans [6][7], la dépendance entre les différentes trames image change. Ainsi, la trame d'intérêt ne dépend plus nécessairement des trames précédentes dans l'ordre de visualisation, mais au choix selon la matrice de mélange appliquée de toutes ou partie des trames précédentes dans l'ordre de codage de compression. Dans le cas particulier où le mélange se fait afin d'offrir une granularité [6] au flux codé, par exemple avec le mode de mélange « Arbre » (ou en anglais « Tree » illustré dans [7] et à la figure 5), la probabilité conditionnelle utilisée dans l'équation (6) doit donc être modifiée pour ne considérer que les trames dont la trame courante dépend. Typiquement, dans l'exemple du mode de mélange « Arbre », uniquement ses supérieures directes dans les niveaux de raffinements les plus élevés. Ceci donne la formule (8)

$$\hat{D}_{gop} = \prod_{i=0}^{N} (1-P_e)^{\beta_i n_i} . D_o +$$

$$\sum_{i=0}^{N} [\prod_{j,j \in FS_i} (1-P_e)^{\beta_j . n_j} . (1-(1-P_e)^{\beta_i n_i}) . D_{loss_i}] \quad (8)$$

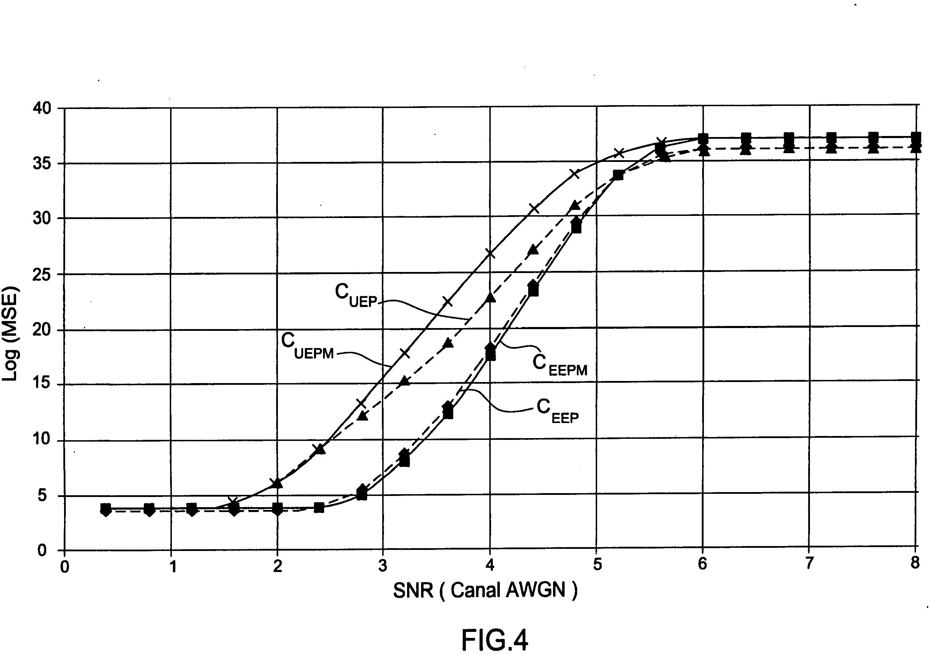

où $FS_i$ est l'ensemble des trames dont la trame i dépend, cet ensemble étant défini par la matrice de mélange, du mode de mélange de trames [6][7]. A titre d'exemple, pour le mode « Arbre » considéré dans l'application numérique présenté en Figure 4, on obtient par exemple $FS_7 = \{0,1,5\}$.

Application numérique

Introduction de protection au moyen de codes RCPC

Une manière facile d'appliquer différents niveaux de protection à différentes parties d'un même flux est de faire varier le niveau ou taux de protection en employant des codes RCPC [5]. Ces codes offrent une faible complexité et permettent d'atteindre différents débits de codage selon une table prédéfinie, offrant une probabilité d'erreur sur un canal à bruit additif blanc gaussien borné (par usage de la borne de l'Union) par [5]:

$$P_e \le \frac{1}{P} \sum_{d=d_{free}}^{\infty} a_d . P_d \quad (9)$$

avec $d_{free}$ la distance libre du code, $\alpha_d$ le nombre de chemins existants, $P_d = \frac{1}{2} erfc(\sqrt{\frac{d.E_s}{N_o}})$ la probabilité qu'un mauvais chemin à distance $d$ (par rapport au chemin correct) soit sélectionné pour un rapport signal à bruit $SNR = E_s/N_0$.

De fait, la distorsion de bout en bout pour un flux vidéo compressé par le standard H.264/AVC, protégé par un code RCPC, et transmis sur un canal à bruit additif blanc gaussien peut donc être estimée en utilisant cette probabilité $P_e$. De même, l'emploi de tout autre code correcteur pourra être estimé en calculant sa probabilité d'erreur $P_e$, par exemple, au moyen d'une borne de l'Union.

Choix du meilleur compromis compression/distorsion

Selon une première variante de réalisation, le procédé selon l'invention offre la possibilité de sélectionner le meilleur compromis entre la protection et la compression pour un point de fonctionnement donné.
Pour cela, il met en oeuvre les étapes suivantes :

* déterminer plusieurs valeurs de sensibilité pour différentes configurations de source et de codage canal pour un débit global donné pour le canal, en utilisant les expressions (6) ou (7),
* sélectionner le couple de valeurs donnant un fonctionnement optimisé pour le canal de transmission de données.

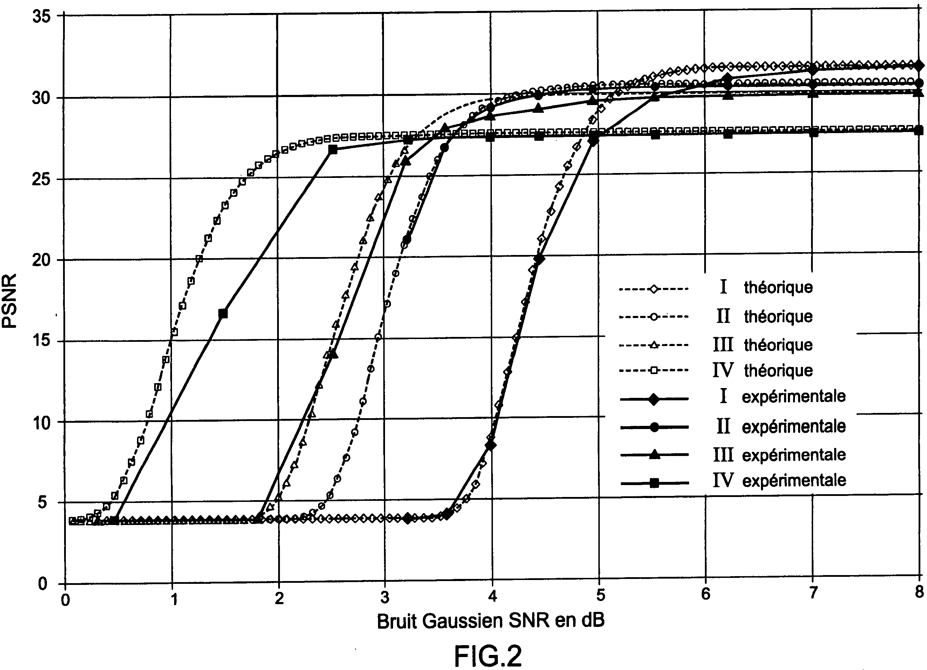

Cette manière de procéder est illustrée à la figure 2 où des sensibilités analytiques et simulées ont été obtenues pour la séquence de référence ITU connue de l'état de l'art dite séquence 'Foreman' dans un format QCIF, 15 Hz pour différentes valeurs de taux de compression/protection pour un débit sur le canal global de 64 kbps.
Sur cette figure 2, on a tracé les courbes théoriques et expérimentales pour différentes valeurs de taux de codage.

| $I_{théorique}$ = 0,66 | $II_{théorique}$= 0,5 | $III_{théorique}$= 0,44 | $IV_{théorique}$= 0,33 |
|---|---|---|---|
| $I_{expérimentale}$= 0,66 | $II_{expérimentale}$= 0,5 | $III_{expérimentale}$= 0,44 | $IV_{expérimentale}$= 0,33 |

On voit que le modèle représente relativement bien la réalité correspondant aux données simulées, et que la configuration fournissant le meilleur rendu vidéo, détermine ici par le meilleur PSNR, est aisément déterminée pour un point de fonctionnement donné. Par exemple, pour un point de fonctionnement $SNR = 3dB$, la meilleure configuration parmi les quatre proposées est de compresser la séquence vidéo à un débit source de 21.3 kbps, puis de protéger le flux résultant avec un code correcteur d'erreur de rendement 1/3, ce qui permet de gagner plus de 5 dB en PSNR par rapport aux autres configurations possibles.

<u>Protection d'erreur inégale dans le mode Data partitioning</u>

Selon une autre variante de réalisation, le procédé selon l'invention permet de déterminer les différents taux de protection à appliquer dans un contexte de protection d'erreur inégale ou UEP, en particulier lorsque le codeur H. 264/AVC travaille dans le mode DP (data partitioning). Les différentes partitions de la trame présentent différentes sensibilités. En utilisant l'équation (7), il est possible de choisir les paramètres optimaux pour le point de fonctionnement de RCPC pour chaque partition, en comparant la distorsion résultante espérée pour différentes configurations des paramètres de codage.

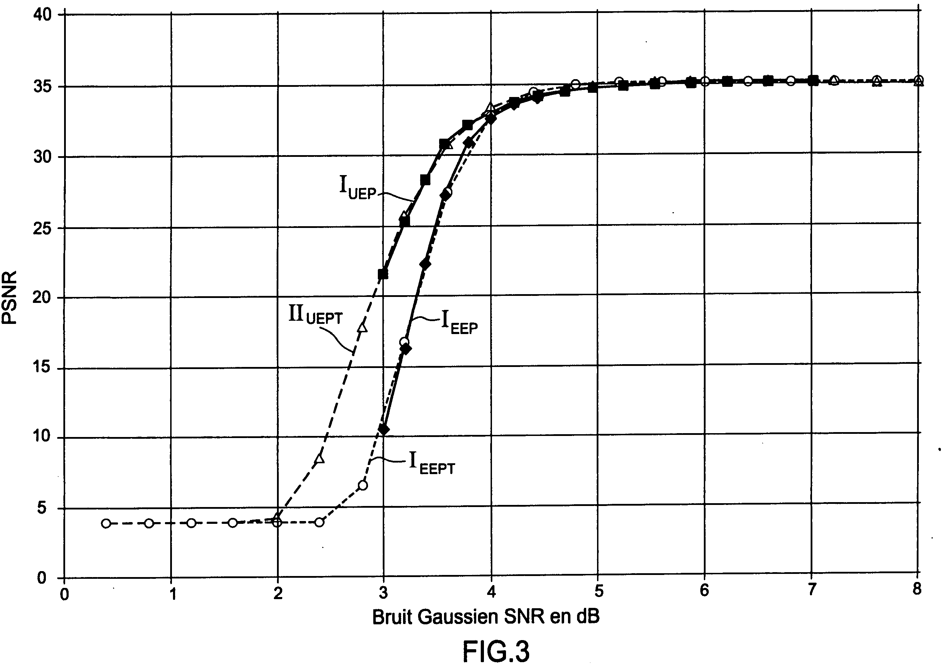

Sur la figure 3, on a tracé plusieurs courbes obtenues pour la séquence 'Foreman' pour un taux de protection moyen R=1/2 dans les modes EEP et UEP. Dans ce dernier cas, le taux de perforation de la partition Intra a été réduit à 0,44 alors que celui de la NAL-C a été augmentée de 0,57 pour atteindre le même débit de canal 64 kbps, offrant ainsi des gains de 5 à 10 dB en termes de PSNR comparé au mode EEP.

| $I_{EEP}$=courbe expérimentale obtenue avec le mode EEP | $II_{UEP}$=courbe expérimentale obtenue avec le mode UEP |
|---|---|
| $I_{EEPT}$ =courbe théorique obtenue avec le mode EEP | $II_{UEPT}$ =courbe théorique obtenue avec le mode UEP |

<u>Protection d'erreur inégale dans le mode Mélange de trames</u>

Selon une autre variante de réalisation, le procédé selon l'invention permet de déterminer les différents taux de protection à appliquer dans le cas où le codeur H.264/AVC travaillé dans le mode mélange de trame, et de déterminer ainsi les rendements de protection d'erreur inégale ou UEP les plus favorables. Dans ce cas, en utilisant l'équation (8) et définissant les ensembles $FS_i$ selon le mode de mélange choisi, il est possible de choisir les meilleurs paramètres pour le point de fonctionnement de RCPC pour chaque partition en comparant la distorsion résultante espérée pour différentes configurations des paramètres de codage.

Sur la figure 4, on a tracé plusieurs courbes obtenues pour la séquence 'Foreman' (QCIF, 15 Hz, une slice par trame) pour un taux de protection moyen R=1/2 dans les modes EEP et UEP pour d'une part un codage classique (sans mélange de trames) et d'autre part le mélange de trame « Arbre » (ou en anglais Tree [7] avec l'indice M sur les courbes) avec trois niveaux de sensibilité. Les tests ont été menés pour un débit canal total de 189 kbit/s correspondant pour l'UEP en mode normal à des rendements $R_{Intra}$=8/20, $R_{Prédite}$=8/14, et pour l'UEP en mode mélange de trames (ou en anglais frame shuffle) des rendements de protection $R_{Intra}$ =8/20, $R_{Prédite1}$ =8/16, $R_{Prédite2}$= $R_{Prédite3}$=8/12.

Le gain apporté par le mélange de trames [6] par rapport au mode de codage normal est visible notamment à fort SNR, puisque le gain en efficacité de compression se traduit en un meilleur PSNR, et l'on constate que l'application de protection inégale UEP permet de gagner encore plus, soit par rapport au mode mélange de trames EEP (gains d'au moins 5 dB de PSNR constatés) ou par rapport au mode UEP du codage classique (gains d'environ 3 dB de PSNR), ce qui nous permet de conclure sur l'intérêt de l'optimisation compression/protection dans le mode mélange de trames, qui voit les deux techniques d'optimisation et de mélange de trames combiner leurs apports pour fournir un résultat encore meilleur.

[1] M. Bystrom and T. Stockhammer, "Dependent source and channel rate allocation for video transmission", in IEEE Trans. on Wireless Comm., vol. 3, n. 1, pp. 258-268, Jan. 2004.

[2] M.G. Martini and M. Chiani, "Rate-Distortion models for Unequal Error Protection for wireless video transmission", in Proc. IEEE Vehicular Technology Conference (VTC'04), pp. 1049-1053, 2004.

[3] C. Lamy-Bergot, N. Chautru and C. Bergeron, "Unequal Error Protection for H.263+ bitstreams over a wireless IP network", to appear in Proc. of the IEEE ICASSP'06 conference, Toulouse, France, May 2006.

[4] C. Bergeron and C. Lamy-Bergot, "Compliant selective encryption for H.264/AVC video streams", Proc. Int. Workshop on Multimedia Processing (MMSP'05), pp. 477-480, Shanghai, China, Oct-Nov 2005.

[5] J. Hagenauer, "Rate-compatible punctured convolutional codes (RCPC codes) and their application," in IEEE Trans. on Comm., vol. 36, n. 4, pp. 339-400, April 1988.

[6] C. Lamy-Bergot et C. Bergeron, "Procédé et dispositif de mélange de trames vidéo pour obtenir de la granularité temporelle," French patent application number FR04/08802, Août 2004.

[7] C. Bergeron, C. Lamy-Bergot, G. Pau, and B. Pesquet-Popescu, Temporal Scalability through Adaptive M-Band Filter Banks for Robust H.264/MPEG-4 AVC Video Coding, EURASIP Journal on Applied Signal Processing 2006 (2006), Article ID 21930, 11 pages.

## Revendications

**1.** Procédé permettant de déterminer des paramètres de fonctionnement, tels que le taux de compression et/ou le taux de protection pour un canal de transmission de données multimédia **caractérisé en ce qu'**il comporte au moins une étape au cours de laquelle on détermine plusieurs valeurs de distorsion pour un groupement d'images ou GOP et pour des couples de valeurs, taux de compression de la source souhaité, taux de protection souhaité en utilisant la formule suivante :

$$\hat{D}_{gop} = \prod_{i=0}^{N}(1-P_e)^{\beta_i n_i}.D_o +$$

$$\sum_{i=0}^{N}[\prod_{j=0}^{i-1}(1-P_e)^{\beta_j.n_j}.(1-(1-P_e)^{\beta_i n_i}).D_{loss_i}]$$

avec $P_e$ la probabilité d'erreur pour un bit, $P_c^{(\beta_j)} = (1-P_e)^{\beta_j.n_j}$ $\quad D_o = D_{o_N}$ la distorsion moyenne pour un groupement d'images,

une étape où l'on compare entre elles les différentes valeurs obtenues pour un point de fonctionnement du canal fixé, et

une étape où l'on sélectionne la valeur de distorsion optimale, la valeur de distorsion étant définie en tenant compte du taux de compression souhaité et du taux de compression.

**2.** Procédé selon la revendication 1 **caractérisé en ce que** les données sont séparées en partitions et **en ce que** l'on détermine les meilleurs taux de compression et de protection pour chacune des partitions en utilisant l'expression suivante :

$$\hat{D}_{gop_{DP}} = \prod_{i=0}^{N}\prod_{k=1}^{3}(1-P_e)^{(1-\beta_{i,k}).n_{i,k}}.D_o +$$

$$\sum_{i=0}^{N}\sum_{k=1}^{3}[\prod_{j=0}^{N}\prod_{\ell=1}^{k-1}(1-P_e)^{\beta_{j,\ell}n_{j,\ell}}\prod_{j=0}^{i-1}(1-P_e)^{\beta_{j,k}n_{j,k}}$$

$$(1-(1-P_e)^{(1-\beta_{i,k}).n_{i,k}})D_{loss_{i,k}}]$$

avec $n_{i,k}$ la longueur de la $i^{ème}$ trame de la $k^{ème}$ partition, conduisant à une distorsion $D_{lossi,k}$ si la partition est perdue et $n_i = \sum_{k=1}^{3} n_{i,k}$.

**3.** Procédé selon la revendication 2 **caractérisé en ce que** chaque trame prédite est transmise en au plus trois slices.

**4.** Procédé selon la revendication 1 **caractérisé en ce que** les données étant mélangées par un processus de mélange de trame on détermine les taux de compression et de protection pour chacune des partitions en utilisant l'expression suivante :

$$\hat{D}_{gop} = \prod_{i=0}^{N} (1-P_e)^{\beta_i n_i} . D_o +$$

$$\sum_{i=0}^{N} [ \prod_{j, j \in FS_i} (1-P_e)^{\beta_j . n_j} . (1-(1-P_e)^{\beta_i n_i}) . D_{loss_i} ]$$

où $FS_i$ est l'ensemble des trames dont la trame i dépend, cet ensemble étant défini par la matrice de mélange du mode de mélange de trames.

**5.** Procédé selon la revendication 4 **caractérisé en ce que** le mode de mélange est le mode offrant de la granularité « Arbre ».

**6.** Procédé selon l'une des revendications précédentes **caractérisé en ce que** l'on utilise un code de protection RCPC pour les données transmises.

**7.** Procédé selon l'une des revendications 1 à 6 **caractérisé en ce que** l'on utilise le standard vidéo H.264/AVC.

**8.** Dispositif permettant de déterminer des paramètres de fonctionnement, tels que le taux de compression et/ou le taux de protection pour un canal de transmission de données multimédia **caractérisé en ce qu'**il comporte au moins un module d'adaptation(5) adapté à recevoir une information sur l'état du canal et les informations de rendement disponibles pour des codeurs, et générer des règles de codage, telles que les valeurs du taux de compression vidéo et du taux de protection en mettant en oeuvre les étapes du procédé selon l'une des revendications 1 à 7.

## Claims

**1.** A method for determining operating parameters, such as the compression rate and/or the protection rate for a multimedia data transmission channel, **characterised in that** it comprises at least:

a step of determining several distortion values for a group of images or GOP and for pairs of values, the required compression rate of the source and the required protection rate, using the following formula:

$$\hat{D}_{gop} = \prod_{i=0}^{N} (1-P_e)^{\beta_i n_i} . D_o +$$

$$\sum_{i=0}^{N} [ \prod_{j=0}^{i-1} (1-P_e)^{\beta_j . n_j} . (1-(1-P_e)^{\beta_i n_i}) . D_{loss_i} ]$$

with $P_e$, being the likelihood of error for one bit, $P_e^{(\beta_j)} = (1-P_e)^{\beta_j . n_j}$, $D_o = D_{o_N}$ the distortion for a group of images,
a step of comparing with each other the different values obtained for a fixed operating point of the channel, and a step of selecting the optimal distortion value, the distortion value being defined by taking into account the required compression rate the compression rate.

**2.** The method according to claim 1, **characterised in** the data is separated into partitions and **in that** the best compression and protection rates are for each of the partitions the following expression:

$$\hat{D}_{gop_{DP}} = \prod_{i=0}^{N} \prod_{k=1}^{3} (1-P_e)^{(1-\beta_{i,k}).n_{i,k}} . D_o +$$

$$\sum_{i=0}^{N} \sum_{k=1}^{3} [\prod_{j=0}^{N} \prod_{\ell=1}^{k-1} (1-P_e)^{\beta_{j,\ell}n_{j,\ell}} \prod_{j=0}^{i-1} (1-P_e)^{\beta_{j,k}n_{j,k}}$$

$$(1-(1-P_e)^{(1-\beta_{i,k}).n_{i,k}}) D_{loss_{i,k}}]$$

with $n_{i,k}$ the length of the $i^{nth}$ of the $k^{th}$ partition, leading to a distortion $D_{lossi,k}$, if the partition is lost and

$$n_i = \sum_{k=1}^{3} n_{i,k}.$$

3. The method according to claim 2, **characterised in that** each of the aforementioned frames is transmitted in three slices at the most.

4. The method according to claim 1, **characterised in that** as the data is mixed by a frame mixing the compression and protection rates for each of the partitions are determined using the following expression:

$$\hat{D}_{gop} = \prod_{i=0}^{N} (1-P_e)^{\beta_i n_i} . D_o +$$

$$\sum_{i=0}^{N} [\prod_{j, j \in FS_i} (1-P_e)^{\beta_j n_j} . (1-(1-P_e)^{\beta_i n_i}) . D_{loss_i}]$$

where $FS_i$ is the set of frames on which the frame i depends, this set being defined by the mixing matrix of the frame mixing mode.

5. The method according to claim 4, **characterised in that** the mixing mode is the mode providing "Tree" granularity.

6. The method according to any one of the preceding claims, **characterised in that** an RCPC protection code is used for the transmitted data.

7. The method according to any one of claims 1 to 6, **characterised in that** video standard H.264/AVC is used.

8. A device for determining operating parameters, such as the compression rate and/or the protection rate for a channel for transmitting multimedia **characterised in that** it comprises at least one adaptation module (5) that is designed to receive information relating to the status of the channel and the efficiency information available for encoders, and to generate coding rules, such as the values of the video compression rate an of the protection rate by implementing the steps of the method according to any one of claims 1 to 7.

**Patentansprüche**

1. Verfahren zum Bestimmen von Betriebsparametern wie z.B. die Kompressionsrate und/oder die Schutzrate für einen Multimediadaten-Übertragungskanal, dadurch gekenlizeichnet, dass es wenigstens Folgendes beinhaltet:

einen Schritt des Bestinimens mehrerer Verzerrungswerte für eine Gruppe von Bildern oder GOP und für Wertepaare, gewünschte Kompressionsrate der Quelle, gewünschte Schutzrate, anhand der folgenden Formel:

$$\hat{D}_{gop} = \prod_{i=0}^{N}(1-P_e)^{\beta_i.n_i}.D_o +$$

$$\sum_{i=0}^{N}[\prod_{j=0}^{i-1}(1-P_e)^{\beta_j.n_j}.(1-(1-P_e)^{\beta_i.n_i}).D_{loss_i}]$$

wobei $P_e$ die Fehlerwahrscheinlichkeit für ein Bit ist, $P_e^{(\beta_j)} = (1-P_e)^{\beta_j.n_j}$, $D_o = D_{o_N}$ die mittlere Verzerrung für eine Gruppe von Bildern ist,
einen Schritt des Vergleichens der verschiedenen Werte miteinander, die für einen festen Betriebspunkt des Kanals erhalten wurden, und
Schritt des Auswählens des optimalen Verzerrungswertes, wobei der Verzerrungswert unter Berücksichtigung der gewünschten Kompressionsrate und der Kompressionsrate definiert wird,

2. Verfahren nach Anspruch 1, **dadurch gekennzeichnet, dass** die Daten partitioniert werden, und dadurch, dass die Kompressions- und Schutzraten für jede der Partitionen mit dem folgenden Ausdruck bestimmt werden:

$$\hat{D}_{gop_{DP}} = \prod_{i=0}^{N}\prod_{k=1}^{3}(1-P_e)^{(1-\beta_{i,k}).n_{i,k}}.D_o +$$

$$\sum_{i=0}^{N}\sum_{k=1}^{3}[\prod_{j=0}^{N}\prod_{\ell=1}^{k-1}(1-P_e)^{\beta_j.n_{j,\ell}}\prod_{j=0}^{i-1}(1-P_e)^{\beta_j.n_{j,k}}$$

$$(1-(1-P_e)^{(1-\beta_{i,k}).n_{i,k}})D_{loss_{i,k}}]$$

wobei $n_{i,k}$ die Länge des $i^{ten}$ Frame der $k^{ten}$ Partition ist, die zu einer Verzerrung $D_{lossi,k}$ führt, wenn die Partition verloren geht und $n_i = \sum_{k=1}^{3} n_{i,k}$.

3. Verfahren nach Anspruch 2, **dadurch gekennzeichnet, dass** jeder der oben erwähnten Frames in höchstens Scheiben übertragen wird.

4. Verfahren nach Anspruch 1, **dadurch gekennzeichnet, dass** beim Mischen der Daten mit einem Frame-Mischprozess die Kompression- und Schutzraten für jede der Partitionen anhand des folgenden Ausdrucks ermittelt werden:

$$\hat{D}_{gop} = \prod_{i=0}^{N}(1-P_e)^{\beta_i.n_i}.D_o +$$

$$\sum_{i=0}^{N}[\prod_{j,j\in FS_i}(1-P_e)^{\beta_j.n_j}.(1-(1-P_e)^{\beta_i.n_i}).D_{loss_i}]$$

wobei $FS_i$ der Satz von Frames ist, von denen Frame i abhängig ist, wobei dieser Satz durch die Mischmatrix des Frame-Mischmodus definiert wird.

5. Verfahren nach Anspruch 4, dadurch gekennzeicluiet, dass der Mischmodus der Modus ist, der eine "Baum"-Granularität bietet.

6. Verfahren nach einem der vorherigen Ansprüche, **dadurch gekennzeichnet, dass** ein RCPC-Schutzcode für die übertragenen Daten verwendet wird.

7. Verfahren nach einem der Ansprüche 1 bis 6, **dadurch gekennzeichnet, dass** ein Videostandard H.264/AVC verwendet wird.

8. Vorrichtung zum Ermitteln von Betriebsparametern wie z.B. die Kompressionsrate und/oder die Schutzrate für einen Multimedia-Daten-Übertragungskanat, **dadurch gekennzeichnet, dass** sie wenigstens ein Adaptionsmodul (5) umfasst, das so ausgelegt ist, dass es eine Information in Bezug auf den Zustand des Kanals und die Effizienzinfornlationen empfängt, die für Codierer verfügbar sind, und Codierungsrcgeln wie z.B. die Werte der Videokompressionsrate und der Schutzrate durch Ausführen der Schritte des Verfahrens nach einem der Ansprüche 1 bis 7 erzeugt.

FIG.1

FIG.2

FIG.3

EP 2 036 359 B1

FIG.4

EP 2 036 359 B1

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6154489 A

- FR 0408802

**Littérature non-brevet citée dans la description**

- **M. BYSTROM ; T. STOCKHAMMER.** Dependent source and channel rate allocation for video transmission. *IEEE Trans. on Wireless Comm.,* Janvier 2004, vol. 3 (1), 258-268
- **M.G. MARTINI ; M. CHIANI.** Rate-Distortion models for Unequal Error Protection for wireless video transmission. *Proc. IEEE Vehicular Technology Conference,* 2004, 1049-1053
- **C. LAMY-BERGOT ; N. CHAUTRU ; C. BERGERON.** Unequal Error Protection for H.263+ bitstreams over a wireless IP network. *Proc. of the IEEE ICASSP'06 conference, Toulouse, France,* Mai 2006

- **C. BERGERON ; C. LAMY-BERGOT.** Compliant selective encryption for H.264/AVC video streams. *Proc. Int. Workshop on Multimedia Processing (MMSP'05),* Octobre 2005, 477-480
- **J. HAGENAUER.** Rate-compatible punctured convolutional codes (RCPC codes) and their application. *IEEE Trans. on Comm.,* Avril 1988, vol. 36 (4), 339-400
- **C. BERGERON ; C. LAMY-BERGOT ; G. PAU ; B. PESQUET-POPESCU.** Temporal Scalability through Adaptive M-Band Filter Banks for Robust H.264/MPEG-4 AVC Video Coding. *EURASIP Journal on Applied Signal Processing 2006,* 2006, 11